# DEMANDE DE BREVET EUROPEEN

(11) **EP 1 832 410 A1**
(43) Date de publication de la demande: **12.09.2007**
(21) Numéro de dépôt: 06110987.2
(22) Date de dépôt: 10.03.2006
(51) Int. Cl.: B29C 65/02, H05B 6/10

(54) **Elément inductif pour le soudage de pièces en plastique**

(71) Demandeur: Aisapack Holding SA, 1896 Vouvry (CH)
(72) Inventeur: Magni, David, 1896 Vouvry (CH); Caron, John, 1896 Vouvry (CH)
(74) Mandataire: Grosfillier, Philippe

(57) **Abrégé**

Elément inductif (3) pour le soudage d'une pièce en plastique (6) sur l'extrémité d'un corps creux tubulaire (7) constitué d'au moins une couche métallique pouvant être chauffée par induction et d'au moins une couche de résine thermoplastique, ledit élément inductif (3) comportant un orifice (4) et étant caractérisé par le fait que l'orifice (4) a une forme curviligne non-circulaire dont le contour est défini par une succession d'arcs de cercle de rayon R1 et R2.

L'invention concerne également un dispositif de soudage utilisant l'élément précité.

## Description

### Domaine de l'invention

La présente invention se situe dans le domaine du soudage de pièces en plastique au moyen d'un composant chauffé par induction. Elle concerne plus précisément le soudage d'une pièce en plastique sur l'extrémité d'un corps tubulaire constitué d'au moins une couche métallique et d'au moins une couche de résine thermoplastique.

### Etat de la technique

Le brevet américain US 4 454 402 décrit un dispositif de soudage par induction magnétique d'une tête de tube sur un corps tubulaire.

Le dispositif de soudage décrit dans cette antériorité est destiné aux tubes dont la tête, et plus généralement la zone de soudage, est de forme circulaire.

II ne pourrait être utilisé efficacement pour le soudage de têtes non-circulaires, p.ex. ovales. En effet, à cause du fait que l'élément inductif le plus proche de la zone de soudage a un orifice central de forme circulaire, le chauffage sur le bord de l'orifice est inhomogène. II en résulte que la qualité de la soudure n'est pas constante en chaque point du bord de l'orifice.

II existe donc un besoin d'avoir un dispositif de soudage qui permette de souder efficacement une tête de contour non-circulaire sur un corps tubulaire.

On relèvera à ce stade que l'on connaît déjà des tubes comportant une tête de contour non-circulaire, voir en particulier la demande de brevet français FR 2 856 981 et le brevet américain US 2 913 768. II convient cependant de relever que dans ce cas, la tête n'est pas soudée par induction sur le corps tubulaire mais par fusion, suite à une injection de matière plastique.

### Exposé général de l'invention

Le problème que la présente invention se propose de résoudre réside dans l'impossibilité de réaliser des tubes comportant une tête de contour non-circulaire par soudage résultant du chauffage d'un composant du tube, p.ex. feuille métallique.

Dans l'invention, la solution du problème précité consiste à utiliser un élément inductif usiné comportant un orifice, l'élément inductif étant caractérisé par le fait que l'orifice a une forme curviligne non-circulaire dont le contour est défini par une succession d'arcs de cercle de rayon R1 et R2.

Dans un mode de réalisation de l'invention, l'orifice a une forme ovale.

De préférence, la distance entre le bord de l'orifice et le bord externe de l'élément inductif est variable. Selon un mode de réalisation particulièrement avantageux, le bord externe est de forme circulaire, ce qui permet d'intégrer plus facilement l'élément inductif au dispositif de soudage.

II est également possible que le bord externe de l'élément inductif ait la forme d'un polygone, p.ex. d'un carré.

L'invention concerne également un dispositif qui comprend un élément inductif tel que défini précédemment, des moyens de chauffage pour chauffer un composant et une zone de soudage formant une courbe fermée. Le dispositif se caractérise par le fait que la distance entre le bord de l'orifice et la zone de soudage est variable.

Avantageusement, cette distance varie de manière à ce que l'énergie de chauffage soit constante en n'importe quel point de la zone soudage.

Selon un mode de réalisation particulièrement intéressant, la zone de soudage est disposée à l'extérieur de l'orifice.

De préférence, la longueur du bord de l'orifice est inférieure à la longueur de la zone de soudage.

L'invention sera mieux comprise ci-après au moyen d'une description détaillée illustrée par les figures suivantes :
La figure 1 présente une coupe schématique d'un dispositif de soudage selon l'invention.
La figure 2 présente une vue de dessus d'un élément inductif selon l'invention.
La figure 3 est un graphe permettant de déterminer les rayons de courbures de l'orifice de l'élément inductif.
La figure 4 montre un premier exemple d'orifice.
La figure 5 montre un deuxième exemple d'orifice.
La figure 6 montre un troisième exemple d'orifice.

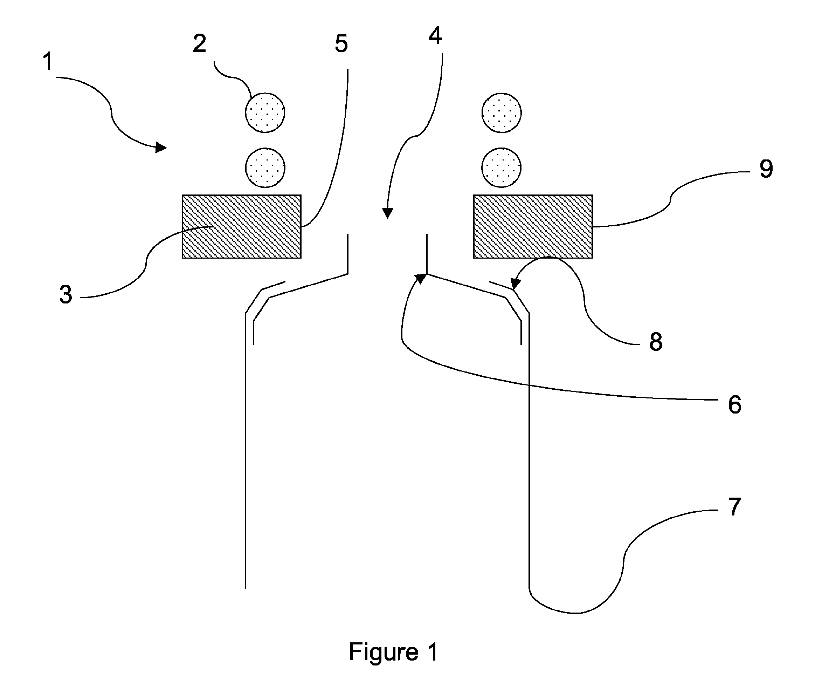

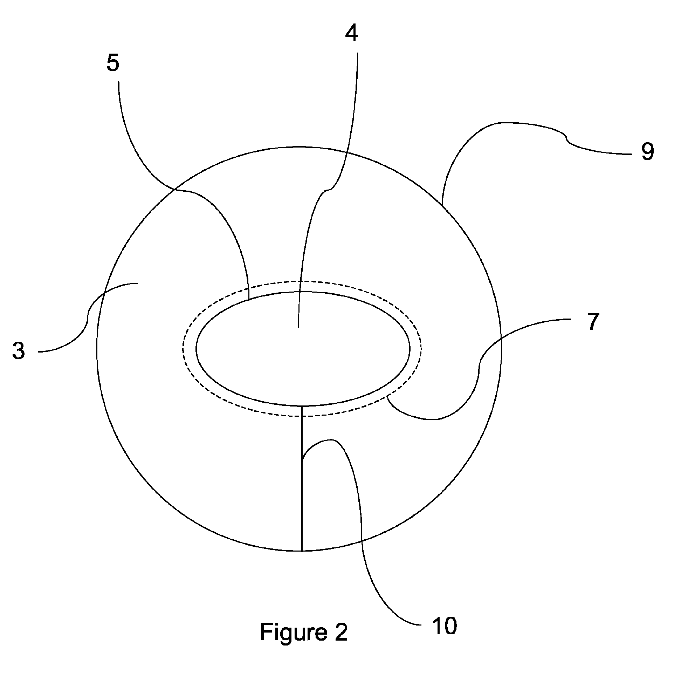

Le dispositif de soudage **1** illustré sur la figure 1 est constitué d'un générateur de courant (non-illustré), d'une bobine **2** et d'un élément inductif usiné **3** de forme annulaire, ce dernier faisant office de dernière spire de la bobine **2.** L'élément inductif **3** comporte un orifice **4** de section ovale (voir figure 2). Sous le dispositif de chauffage **1,** se trouve un tube constitué d'une tête 6 et d'une jupe **7,** ces deux pièces **6,7** se superposant vers leurs extrémités et définissent de la sorte une zone de soudage **8.** Comme on peut le constater sur la figure 1, la zone de soudage **8** se situe à l'extérieur de l'orifice **4.** Par ailleurs, la longueur de la zone de soudage **8** est supérieure à la longueur du bord **5** de l'orifice **4.**

On a en effet constaté de manière surprenante qu'une telle disposition donnait une soudure de meilleure qualité, en particulier une soudure plus homogène.

L'élément inductif **3** comporte en outre une fente **10** s'étendant de l'orifice **4** vers le bord externe **9** de l'élément **3.** L'existence de la fente **10** évite la génération de courants qui perturbent le bon fonctionnement du chauffage.

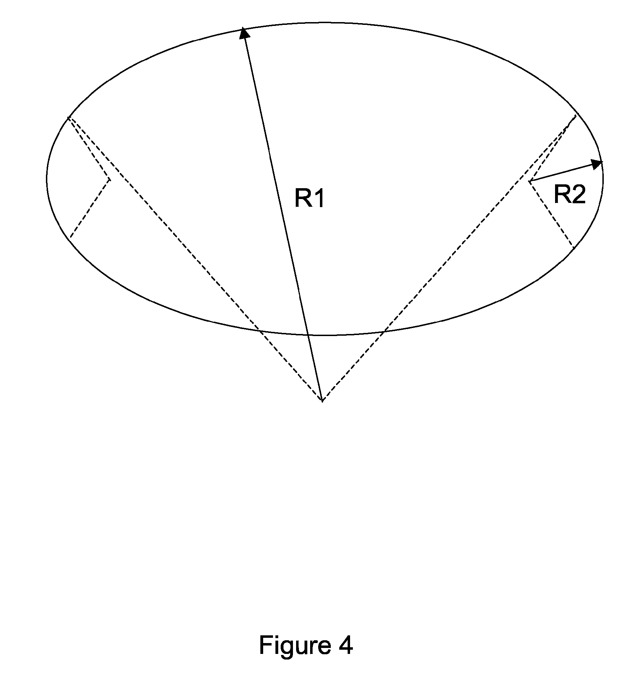

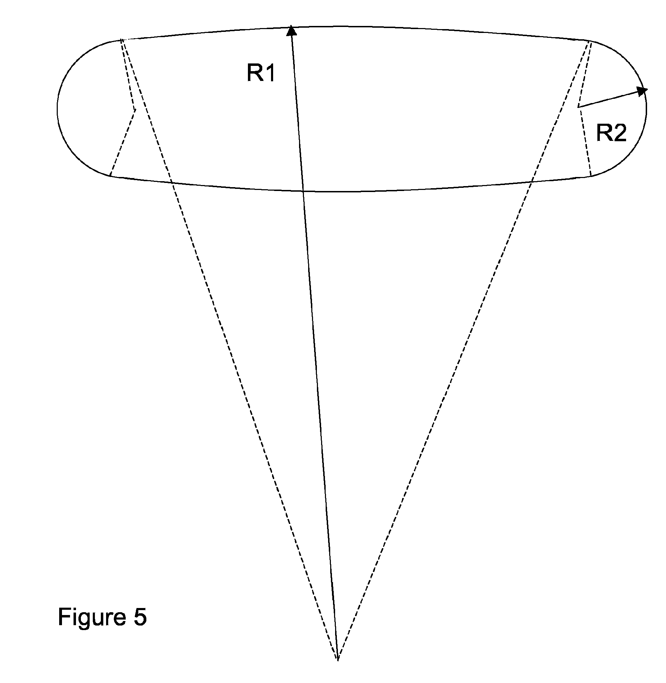

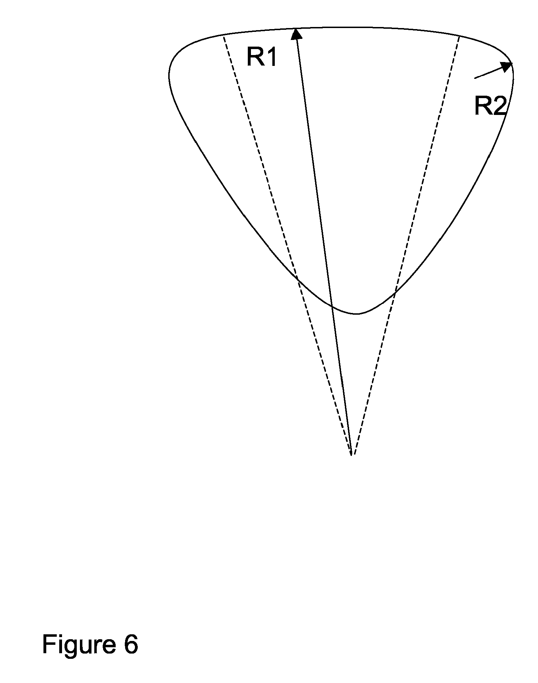

Différentes formes d'orifice **4** peuvent être envisagées, les figures 4 à 6 en représentent que quelques exemples parmi d'autres.

Afin d'obtenir une soudure homogène sur toute la zone de soudage, il importe de chauffer de manière constante chaque point du bord **5** de l'orifice **4.** A cet effet, le rapport des rayons R2/R1 ainsi que la distance entre le bord **5** de l'orifice **4** et la zone à souder **8** revêtent d'une grande importance.

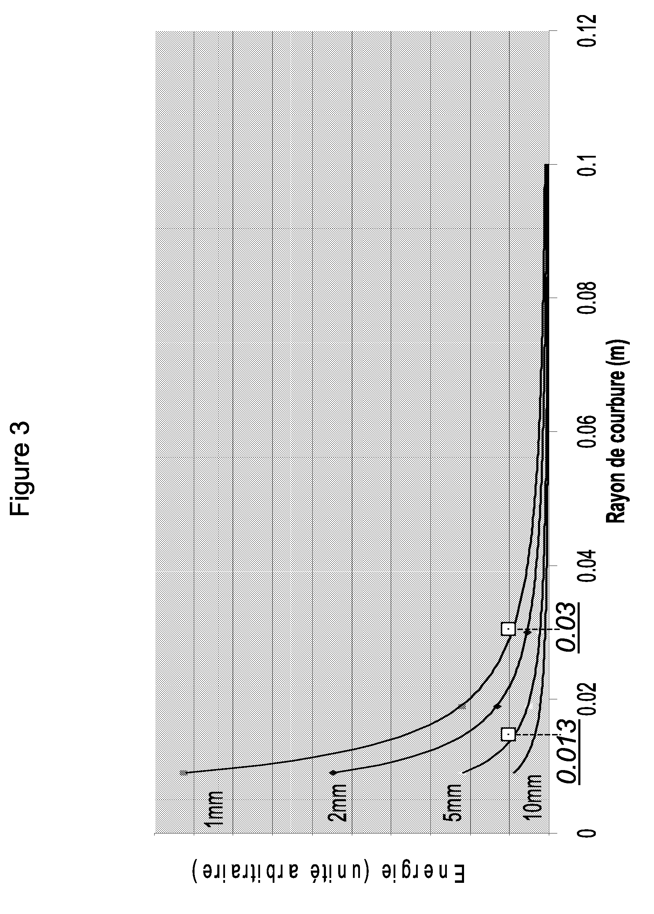

Le graphe illustré sur la figure 3 permet de déterminer ces paramètres.

L'abscisse représente le rayon de courbure et l'ordonnée donne la valeur d'énergie de chauffage en fonction du rayon de courbure.

Les quatre courbes illustrées représente la relation qui lie l'énergie et le rayon pour une distance constante entre le bord **5** de l'orifice **4** et la zone à souder **8.**

Ainsi, à titre d'exemple, si l'on souhaite avoir un orifice ovale dont le grand rayon de courbure R1 est de 3 cm et le petit rayon de courbure R2 est de 1.3 cm, les deux arcs de cercle correspondants devront se situer à une distance de 1 mm, respectivement 5 mm, de la zone à souder **8.**

De la lecture du graphe de la figure 3, on constate qu'il est nécessaire de faire varier la distance entre le bord **5** de l'orifice **4** et la zone de soudage **8** pour avoir un chauffage uniforme en chaque point de la zone de soudage **8.**

II va sans dire que l'invention ne se limite pas aux exemples précités.

## Revendications

1. Elément inductif (3) pour le soudage d'une pièce en plastique (6) sur l'extrémité d'un corps creux tubulaire (7) constitué d'au moins une couche métallique pouvant être chauffée par induction et d'au moins une couche de résine thermoplastique, ledit élément inductif (3) comportant un orifice (4) et étant **caractérisé par le fait que** l'orifice (4) a une forme curviligne non-circulaire dont le contour est défini par une succession d'arcs de cercle de rayon R1 et R2.

2. Elément selon la revendication précédente **caractérisé par le fait que** l'orifice (4) a une forme ovale.

3. Elément selon la revendication 1 ou 2 **caractérisé par le fait que** la distance entre le bord (5) de l'orifice (4) et le bord externe (9) de l'élément inductif (3) est variable.

4. Elément selon la revendication 3 **caractérisé par le fait que** le contour externe de l'élément inductif (3) forme un cercle.

5. Dispositif de soudage (1) comprenant un élément inductif (3) selon l'une quelconque des revendications précédentes, des moyens de chauffage (2) pour chauffer un composant et une zone de soudage (8) formant une courbe fermée, **caractérisé par le fait que** la distance entre le bord (5) de l'orifice (4) et la zone de soudage (8) est variable.

6. Dispositif (1) selon la revendication précédente **caractérisé par le fait que** la distance entre le bord (5) de l'orifice (4) et la zone de soudage (8) varie de manière à ce que l'énergie de chauffage soit constante en n'importe quel point de la zone soudage (8).

7. Dispositif (1) selon la revendication précédente **caractérisé par le fait que** la distance entre le bord (5) de l'orifice (4) et la zone de soudage (8) est déterminée à partir du graphe de la figure 3.

8. Dispositif (1) selon l'une quelconque des revendications 5 à 7 **caractérisé par le fait que** la zone de soudage (8) est disposée à l'extérieur de l'orifice (4).

9. Dispositif (1) selon la revendication précédente **caractérisé par le fait que** la longueur du bord (5) de l'orifice est inférieure à la longueur de la zone de soudage (8).
